# EUROPÄISCHE PATENTSCHRIFT

(11) **EP 2 897 751 B1**
(45) Veröffentlichungstag und Bekanntmachung des Hinweises auf die Patenterteilung: **01.04.2020**
(21) Anmeldenummer: 13805231.1
(22) Anmeldetag: 13.09.2013
(51) Int. Cl.: B23C 5/10

(54) **DREHANTREIBBARES SPANABHEBENDES WERKZEUG**
MACHINING TOOL WHICH IS DRIVABLE IN ROTATION
OUTIL D'USINAGE POUVANT ÊTRE ENTRAÎNÉ EN ROTATION

(30) Priorität: 18.09.2012 DE 102012216654
(43) Veröffentlichungstag der Anmeldung: 29.07.2015
(73) Patentinhaber: Gühring Kg, 72458 Albstadt (DE)
(72) Erfinder: TEUSCH, Bruno, 73733 Esslingen (DE)
(74) Vertreter: Gleim, Christian Ragnar
(86) Internationale Anmeldenummer: PCT/DE2013/000523
(87) Internationale Veröffentlichungsnummer: WO 2014/044239

(56) Entgegenhaltungen:
- EP-A1- 1 240 963
- WO-A1-2006/038848
- WO-A1-2007/003248
- WO-A1-2008/116446
- DE-U1- 9 107 604
- JP-A- H10 328 921

## Beschreibung

Die Erfindung betrifft ein drehantreibbares spanabhebendes Werkzeug, im Besonderen einen Kugelbahnfräser, mit einem sich entlang einer Drehachse erstreckenden Halter und einem am Halter durch Verschraubung mit einer im Halter angeordneten Gewindehülse koaxial gehaltenen Schneidkopf.

Ein derartiges Werkzeug ist aus der WO 2008/116446 A1 bekannt. Die WO 2008/116446 A1 zeigt und beschreibt im Besonderen ein Werkzeugsystem (Werkzeug) mit einem HSK-Werkzeughalter (Halter) zur Ankopplung an eine Werkzeugmaschinenspindel und einen Kugelbahnfräser (Schneidkopf). Der Kugelbahnfräser besteht aus einem Fräskopf aus Vollhartmetall, an den sich einstückig ein Schaft anschließt und der vier Schneidplatten aus einem Hartstoff, z.B. CBN oder PKD, trägt. Der Schaft ist in eine Bohrung eines Zwischenstücks aus Stahl eingeschrumpft. Kugelbahnfräser und Zwischenstück sind damit einstückig miteinander verbunden. Das Zwischenstück hat einen mit einem Außengewinde versehenen Zapfenfortsatz, der in einem hülsenförmigen Bauteil mit Innengewinde (Gewindehülse) verschraubt ist, das axialfest mit seitlichem Spiel in einer Bohrung im Werkzeughalter sitzt. Zur Befestigung des Kugelbahnfräsers (Schneidkopf mit Zwischenstück) am Werkzeughalter (Halter) wird das hülsenförmige Bauteil mittels eines über den HSK-Schaft des Werkzeughalters in einen Innensechskant im hülsenförmigen Bauteil eingeführten Sechskantschlüssels auf den Zapfenfortsatz des Zwischenstücks aufgeschraubt, wodurch der Zapfenfortsatz in den Werkzeughalter eingezogen wird, wodurch eine ringförmige Planfläche am Zwischenstück in Anlage mit einer gegenüberliegenden stirnseitigen Planfläche am Werkzeughalters kommt. Das in der WO 2008/116446 A1 beschriebene Werkzeug besitzt des Weiteren ein Kühl-/Schmiermittelversorgungssystem mit einem entlang der Drehachse zentrisch durch den Werkzeughalter, das Zwischenstück und den Schaft bis in den Fräskopf erstreckenden Hauptkanal gebildet ist, der sich im Fräskopf schließlich in mehrere Zweigkanäle verzweigt, die jeweils zu einer Schneide des Fräskopfs führen.

Die JP H10 328921 A beschreibt ein Drehwerkzeug in Form eines Senkwerkzeugs, mit einem motorantreibbaren Werkzeughalter für eine klemmspannende Halterung eines Werkzeugs, in den eine Spannhülse eingesteckt wird und in die wiederum ein Schaft eines Werkzeugs mit einem Schneidkopf eingesteckt wird. Die Spannhülse besitzt am halterseitigen Ende ein Gewinde, in welches durch den Halter von einer Antriebsseite des Halters aus eine Spannschraube eingeschraubt werden kann, um die Spannhülse in den Halter hineinzuziehen und klemmspannend zu fixieren. Hierzu besitzt die Spannhülse einen in Längsrichtung verlaufenden Spalt sowie eine radiale Erweiterung in Richtung Drehwerkzeugkopf. Bei der Montage wird zunächst der mit dem Schneidkopf einstückig ausgebildete Werkzeugschaft in die Spannhülse eingesteckt und anschließend die Spannhülse in den Halter eingeschoben. Anschließend wird die Spannhülse vom halterseitigen Ende mittels der Spanschraube von der Antriebsseite des Halters her eingeschraubt und verklemmt dabei das Werkzeug im Halter.

Die WO 2007/003248 A1 offenbar eine Maschinenreibahle mit einem Grundkörper und einem Wechselschneidkopf, welcher mit einer durch den Wechselschneidkopf hindurchgreifenden Spannschraube am Grundkörper verspannt wird.

In der EP 1 240 963 A1 wird eine Verbindungsstelle zwischen zwei Werkzeugteilen gezeigt, die mittels einer in Längsrichtung der Werkzeugteile verlaufenden Gewindespindel miteinander verbunden sind. Die Gewindespindel weist zwei gegenläufige Gewindeabschnitte auf.

In der DE 91 07 604 U1 ist ein Dehnspannfutter mit einer Werkzeugaufnahme offenbart, wobei die Werkzeugaufnahme und das Dehnspannfutter durch eine Differenzgewindeschraube lösbar miteinander verbunden sind.

Bei dem in der WO 2008/116446 A1 beschriebenen Werkzeug ist das hülsenförmige Bauteil zur Betätigung nur Ober HSK-Schaft des Werkzeughalters zugänglich. Damit ist ein Wechsel des Fräskopfs nur in einem Zustand möglich, in dem der Werkzeughalter von einer Werkzeugmaschinenspindel abgekuppelt ist. Das Zwischenstück, das den Fräskopf mit dem Werkzeughalter verbindet, erhöht zudem die Zahl der Teile, aus denen das Werkzeugsystem zusammengesetzt ist und sieht Verbindungsstellen zum Fräskopf und Werkzeughalter hin vor, die im Hinblick auf die für eine hohe Rundlaufgenauigkeit erforderliche Steifigkeit besondere Aufmerksamkeit bei der Fertigung bedürfen.

Ausgehend von der WO 2008/116446 A1 hat die Erfindung die Aufgabe, ein einfach aufgebautes, kompaktes Werkzeug, im Besonderen einen Kugelbahnfräser, zu schaffen, bei dem sich der Schneidkopf selbst dann wechseln lässt, wenn das Werkzeug an eine Werkzeugmaschinenspindel angekuppelt ist.

Diese Aufgabe wird durch ein Werkzeug mit den Merkmalen des Anspruchs 1 gelöst. Die abhängigen Ansprüche betreffen vorteilhafte oder bevorzugte Weiterbildungen des erfindungsgemäßen Werkzeugs sowie vorteilhafte Ausführungen einzelner Elemente des erfindungsgemäßen Werkzeugs.

Ein erfindungsgemäßes drehantreibbares spanabhebendes Werkzeug, bei dem es sich in einer speziellen Ausführung um einen Kugelbahnfräser handelt, hat einen sich entlang einer Drehachse erstreckenden Halter und einen am Halter durch Verschraubung mit einer im Halter angeordneten Gewindehülse koaxial gehaltenen Schneidkopf. Es zeichnet sich dadurch aus, dass die Gewindehülse im Halter drehfest angeordnet und axial zumindest in Richtung Schneidkopf abgestützt ist, und der Schneidkopf mittels einer in die Gewindehülse eingeschraubten Gewindespindel axial gegen den Halter gespannt ist, wobei die Gewindespindel ein Differenzialgewinde mit gegensinnig wirkenden Gewindeabschnitten aufweist, die in eine Gewindebohrung in der Gewindehülse bzw. eine Gewindebohrung im Schneidkopf eingeschraubt sind.

Der Halter ist wie bei dem aus der WO 2008/116446 A1 bekannten Werkzeug zur Ankopplung an eine Werkzeugmaschinenspindel ausgelegt. Er weist hierzu einen geeigneten Schaft, z.B. einen an sich bekannten HSK-Schaft, auf. Der Schneidkopf hat eine oder mehrere Schneiden. Er kann hierzu einstückig, z.B. aus Vollhartmetall oder Hartstoff, ausgebildet sein. In einer vorteilhaften Ausführung ist der Schneidkopf aber aus einem Trägerkörper, vorzugsweise aus Stahl oder Vollhartmetall, und einem oder mehreren am Trägerkörper befestigten Schneidelementen, z.B. Wechsel- oder Wendeschneidplatten, vorzugsweise aus Hartstoff, im Besonderen aus CBN oder PKD, oder mit einer Hartstoffbeschichtung, im Besonderen aus CBN oder PKD, gebildet. Die Schneidelemente können am Trägerkörper stoffschlüssig, z.B. durch Löten oder Kleben, befestigt sein.

Im Unterschied zu dem aus der WO 2008/116446 A1 bekannten Werkzeug ist bei einem erfindungsgemäßen Werkzeug die Gewindehülse im Halter drehfest angeordnet und erfolgt die Befestigung des Schneidkopfs am Halter durch eine Drehbetätigung der Gewindespindel relativ zu der im Halter drehfest angeordneten Gewindehülse.

Da die Gewindespindel nicht unmittelbar mit dem Halter sondern mit der im Halter integrierten Gewindehülse verschraubt ist, kann die Gewindehülse unabhängig vom Werkstoff des Halters aus einem für die Gewindefertigung geeigneten zähelastischen Werkstoff, im Besonderen einem HSS (Schnellarbeitsstahl)-Werkstoff, gefertigt werden. HSS-Werkstoffe zeichnen sich durch große Härte, Verschleißfestigkeit und Warmfestigkeit ist. Sie sind im Vergleich zu Hartmetallen bruchunempfindlicher gegen Stöße und Schwingungen. Es lässt sich auf diese Weise die für die axiale Verspannung des Schneidkopfs gegen den Halter erforderliche Gewindefestigkeit sicherstellen.

Die Gewindespindel kann z.B. in der Art einer Kopfschraube mit einem im Schneidkopf axial abgestützten Kopf und einem in der Gewindehülse verschraubten Schaft ausgebildet sein, wobei der Kopf eine Schlüsselaufnahmeöffnung, beispielsweise einen Innensechskant, aufweist, die über einen axialen Durchgriff im Schneidkopf für einen Betätigungsschlüssel zugänglich ist. Die Gewindespindel ist als eine Differenzialgewindespindel mit gegensinnig wirkenden Gewindeabschnitten ausgeführt, die in eine Gewindebohrung in der Gewindehülse bzw. eine Gewindebohrung im Schneidkopf eingeschraubt sind. Eine derartige Gewindespindel ist mangels eines im Durchmesser größeren Kopfs für kleinere Schneidkopfdurchmesser geeignet. Zudem können die Schneiden des Schneidkopfs zum Zentrum (zur Drehachse) hin verlängert werden. Durch die gegensinnig wirkenden Gewindeabschnitte lässt sich erreichen, dass mit wenigen Gewindespindeldrehungen eine zuverlässige feste axiale Verspannung des Schneidkopfs gegen den Halter erhalten wird.

Der Schneidkopf wird durch eine Drehbetätigung der Gewindespindel axial gegen den Halter gespannt. Die Gewindehülse ist hierzu im Halter drehfest angeordnet und in axialer Richtung zumindest in Richtung Schneidkopf abgestützt. Eine zusätzliche axiale Abstützung der Gewindehülse in Richtung Halter ist vorteilhaft, um beim Lösen der Verschraubung eine axiale Ausstoßkraft zu erzeugen, die den Schneidkopf vom Halter weg antreibt. Für die axiale Abstützung der Gewindehülse können im Halter entsprechende Anschläge vorgesehen sein. Die Anschläge können so ausgelegt sein, dass die Gewindehülse im Halter axialfest angeordnet ist. Die Anschläge können aber auch so ausgelegt sein, dass die Gewindehülse im Halter begrenzt axial verschieblich angeordnet ist.

Die Gewindehülse ist vorteilhaft mit einer definierten Spielpassung in einer Axialbohrung im Halter angeordnet und mit dem Halter über ein oder mehrere, mit der Gewindehülse und dem Halter form- und/oder kraftschlüssig zusammenwirkende Verbindungsmittel drehfest verbunden. Das oder die Verbindungsmittel können beispielsweise in der Art einer von Welle-Nabe-Verbindungen bekannten Stiftverbindung jeweils als ein Verbindungsstift ausgeführt sein, der in einer zugeordneten radialen Querbohrung, die sich vom Halter in die Gewindehülse hinein, form- und/oder kraftschlüssig aufgenommen ist erstreckt. Über eine derartige Stiftverbindung lässt sich neben der drehfesten Anordnung der Gewindehülse die Gewindehülse im Halter zugleich auch in axialer Richtung festlegen.

Alternativ dazu kann eine drehfeste Verbindung zwischen der im Halter mit einer Spielpassung aufgenommenen Gewindehülse und dem Halter unmittelbar (d.h. ohne ein zusätzliches Verbindungsmittel) durch einen Formschluss zwischen der Gewindehülse und dem Halter durch beispielsweise formschlüssig zusammenwirkende Querschnittsprofile, wie es im Prinzip von Welle-Nabe-Verbindungen bekannt ist, oder mittelbar durch an sich bekannte Mitnehmerstrukturen (Mitnehmernuten, Mitnehmersteine), die einen Formschluss zwischen der Gewindehülse und dem Halter bewirken, erreicht werden.

Eine axiale Abstützung der Gewindehülse in Richtung Schneidkopf lässt sich beispielsweise dadurch erreichen, dass die Gewindehülse an ihrem halterseitigen Ende einen flanschartigen Radialvorsprung aufweist, der in Richtung Schneidkopf an einer im Halter ausgebildeten Radialschulter axial abgestützt ist, die einen axialen Anschlag bildet.

Die erfindungsgemäße Gestaltung bietet die Möglichkeit, den Halter modular in der Weise aufzubauen, dass die Gewindehülse im Halter austauschbar angeordnet ist. So ist der Halter aus einem Grundkörper und einem am Grundkörper dreh- und axialfest gehaltenen Aufnahmeteil gebildet, das die Gewindehülse drehfest aufnimmt. Die Gewindehülse kann dabei in axialer Richtung zwischen dem Aufnahmteil und dem Grundkörper fest oder begrenzt verschieblieh angeordnet sein. Das Aufnahmeteil kann im Besonderen aus einer hohlzylindrischen Buchse gebildet und mit einer Presspassung in einer Axialbohrung im Grundkörper aufgenommen, z.B. eingeschrumpft, sein. Durch Erwärmung des Grundkörpers kann die feste Verbindung zwischen Aufnahmeteil und Grundkörper wieder gelöst werden. Um eine hohe Werkzeugsteifigkeit zu erzielen, ist das Aufnahmeteil vorteilhaft aus einem Hartmetall-Werkstoff hergestellt. Das Aufnahmeteil bietet dadurch eine feste Grundlage, für die Ausbildung der oben diskutierten Anlageflächen zwischen Schneidkopf und Halter.

Zur Drehbetätigung der Gewindespindel bietet das erfindungsgemäße Werkzeug die Möglichkeit, die Gewindespindel von der Halterseite und/oder von der Schneidkopfseite her zu betätigen. In einer bevorzugten Ausführung des erfindungsgemäßen Werkzeugs ist die Gewindespindel über einen axialen Durchgriff im Schneidkopf von der halterfernen Stirnseite des Schneidkopfs aus betätigbar. Durch diese Ausführung lässt sich ein Wechsel des Schneidkopfs auch bei einem an eine Werkzeugmaschinenspindel angekoppelten Halter durchführen.

Zur Befestigung des Schneidkopfs am Halter können am Halter eine oder mehrere Anlageflächen vorgesehen sein, an der bzw. an denen der Schneidkopf bei der axialen Verspannung zur Anlage kommt.

Im Interesse einer hohen Rundlaufgenauigkeit kann der Schneidkopf an seinem halterseitigen Ende einen in einer axialen Aufnahmeöffnung im Halter eingesetzten Axialvorsprung aufweisen. Der Axialvorsprung und die Aufnahmeöffnung können jeweils zumindest abschnittsweise in der Weise zylindrisch ausgebildet sein, dass bei der axialen Verspannung des Schneidkopfs gegen den Halter der Axialvorsprung (Schneidkopf) in der Aufnahmeöffnung (Halter) eine axiale Führung erfährt. Der Axialvorsprung kann hierzu mit einer engen Spielpassung in der Aufnahmeöffnung aufgenommen sein. Alternativ dazu können der Axialvorsprung und die Aufnahmeöffnung zumindest abschnittsweise in der Weise konisch ausgebildet sein, d.h. der Axialvorsprung einen Außenkonus und die Aufnahmeöffnung einen passenden Innenkonus aufweisen, dass bei der axialen Verspannung des Schneidkopfs gegen den Halter der Axialvorsprung (Schneidkopf) in der Aufnahmeöffnung (Halter) eine Zentrierung erfährt. Durch die Konusflächenanlage wird im Unterschied zu der einfacher zu fertigenden Zylinderflächenanlage, die stets mit einem - wenn auch geringen - Spiel behaftet ist, eine spielfreie Flächenanlage zwischen dem Axialvorsprung und der Aufnahmeöffnung erhalten, die eine automatische Zentrierung des Schneidkopfs am Halter bewirkt. Dadurch wir eine hohe Rundlaufgenauigkeit des Werkzeugs gewährleistet.

Zusätzlich kann der Schneidkopf an seinem halterseitigen Ende eine den Axialvorsprung umgebende ringförmige Stirnfläche aufweisen, die bei der axialen Verspannung des Schneidkopfs gegen den Halter zur Anlage an einer gegenüberliegenden ringförmigen Stirnfläche am Halter kommt. Die ringförmige Stirnfläche am Schneidkopf und die gegenüberliegende ringförmige Stirnfläche am Halter können jeweils von einer in einer Radialebene liegenden Planfläche gebildet sein. Sie können aber auch jeweils von einer Konusfläche gebildet sein. Durch die Anlage der schneidkopfseitigen Stirnfläche an der halterseitigen Stirnfläche wird eine Verbindung zwischen Schneidkopf und Halter erreicht, die sich durch eine hohe Steifigkeit mit dem Ergebnis einer hohen Rundlaufgenauigkeit auszeichnet. In Verbindung mit der oben diskutierten Konusflächenanlage zwischen Axialvorsprung und Aufnahmeöffnung wird mit der Stirnflächenanlage in der Summe daher eine zweifache Flächenanlage zwischen Schneidkopf und Halter erreicht, die neben einer hohen Rundlaufgenauigkeit eine hohe Werkzeugsteifigkeit sicherstellt.

In einer bevorzugten Ausführung kann der Schneidkopf einen stirnseitig offenen axialen Durchgriff aufweisen, über den ein Zugriff auf die im Schneidkopf verschraubte Gewindespindel zur Drehbetätigung derselben ermöglicht ist. Um das Eindringen von Spänen, Schmutzpartikeln etc. zu verhindern, kann der axiale Durchgriff stirnseitig mittels eines entfernbar angeordneten Verschlusselements verschlossen sein. Das Verschlusselement kann beispielsweise von einer in den axialen Durchgriff eingeschraubten Verschlussschraube gebildet sein.

In einer vorteilhaften Weiterbildung weist das erfindungsgemäße Werkzeug des Weiteren einen entlang der Drehachse zentrisch durch den Halter (ggf. den Grundkörper und das Aufnahmeteil des Halters), die Gewindehülse und die Gewindespindel in den Schneidkopf verlaufenden Kühl-/Schmiermittelkanal zum Versorgen des Schneidkopfs mit einem halterseitig zugeführten Kühl-/Schmiermittel auf. Weist der Schneidkopf den oben erwähnten axialen Durchgriff auf, kann dieser einen Teil des Kühl-/Schmiermittelkanals bilden. In diesem Fall kann das erfindungsgemäße Werkzeug den Schneidkopf beispielsweise dadurch mit Kühl-/Schmiermittel versorgen, dass dieses über den axialen Durchgriff stirnseitig austritt und sich am Ort der Schneidbearbeitung um den Schneidkopf herum verteilt.

Von dem zentrischen Kühl-/Schmiermittelkanal kann im Schneidkopf wenigstens ein Zweigkanal abzweigen, der zu wenigstens einer zugeordneten Schneide am Schneidkopf führt. In diesem Fall kann es sinnvoll sein, den ggf. vorhandenen axialen Durchgriff im Schneidkopf durch das oben erwähnte Verschlusselement zu verschlie-ßen, um zu erreichen, das Kühl-/Schmiermittel nur über den wenigstens einen Zweigkanal zu der wenigstens einen zugeordneten Schneide strömt.

Im Folgenden wird eine Ausführungsform eines erfindungsgemäßen drehantreibbaren spanabhebenden Werkzeugs am Beispiel eines in den beigefügten Zeichnungen gezeigten Kugelbahnfräsers beschrieben. In den Zeichnungen zeigt:
Fig. 1a eine Seitenansicht des Kugelbahnfräsers;
Fig. 1b eine Vorderansicht des Kugelbahnfräsers;
Fig. 1c eine Explosionszeichnung des Kugelbahnfräsers in perspektivischer Darstellung;
Fig. 2a einen Halbschnitt (längs) eines Halters des Kugelbahnfräsers;
Fig. 2b eine Vorderansicht des Halters;
Fig. 3a einen Halbschnitt (längs) eines Grundkörpers des Halters;
Fig. 3b eine Vorderansicht des Grundkörpers;
Fig. 4a einen Vollschnitt (längs) eines Aufnahmeteils des Halters;
Fig. 4b eine Vorderansicht des Aufnahmeteils;
Fig. 5 einen Halbschnitt (längs) einer im Aufnahmeteil aufgenommenen Gewindehülse;
Fig. 6a eine Seitenansicht eines Fräskopfs mit Gewindespindel;
Fig. 6b eine Vorderansicht des Fräskopfs;
Fig. 6c einen im Maßstab verkleinerten Vollschnitt (längs) des Fräskopfs mit Gewindespindel;
Fig. 7a einen Halbschnitt (längs) der Gewindespindel;
Fig. 7b eine Vorderansicht der Gewindespindel; und
Fig. 7c eine Rückansicht der Gewindespindel.

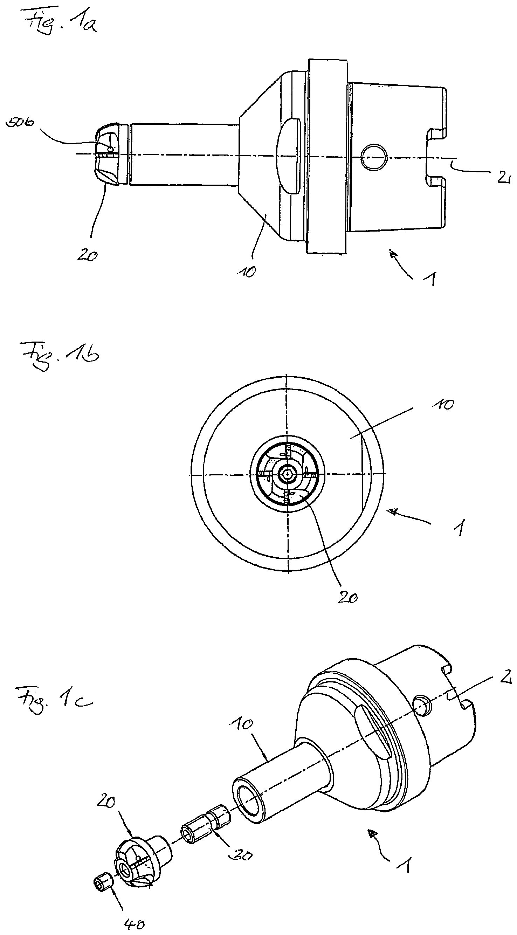

Das in Fig. 1a und 1b gezeigte drehantreibbare spanabhebende Werkzeug ist als ein Kugelbahnfräser 1 mit einem sich entlang einer Drehachse 2 erstreckenden Halter 10 und einen am Halter 10 gehaltenen Schneidkopf in Gestalt eines Fräskopfs 20 ausgeführt. Zur Befestigung am Halter 10 wird der Fräskopf 20 mittels einer Gewindespindel 30 mit dem Halter 10 axial verschraubt, wie es in Fig. 1c gezeigt ist. Fig. 1c zeigt des Weiteren ein Verschlusselement in Gestalt einer Verschlussschraube 40, die einen axialen Durchgriff im Fräskopf 20 verschließt.

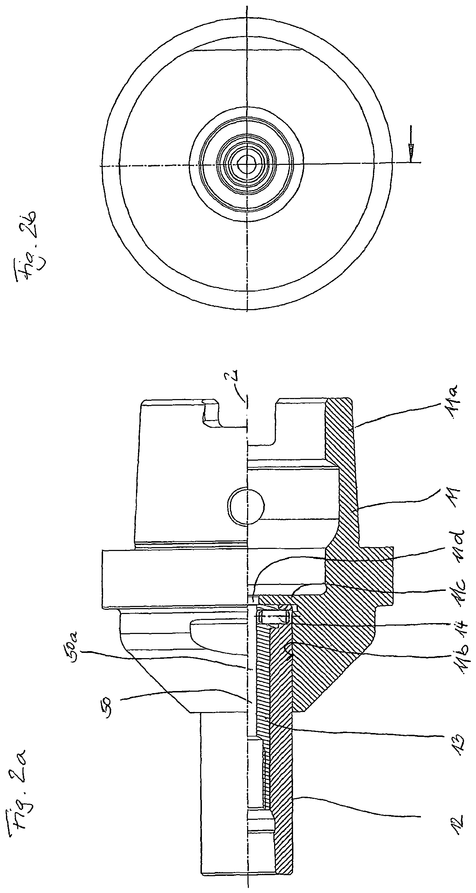

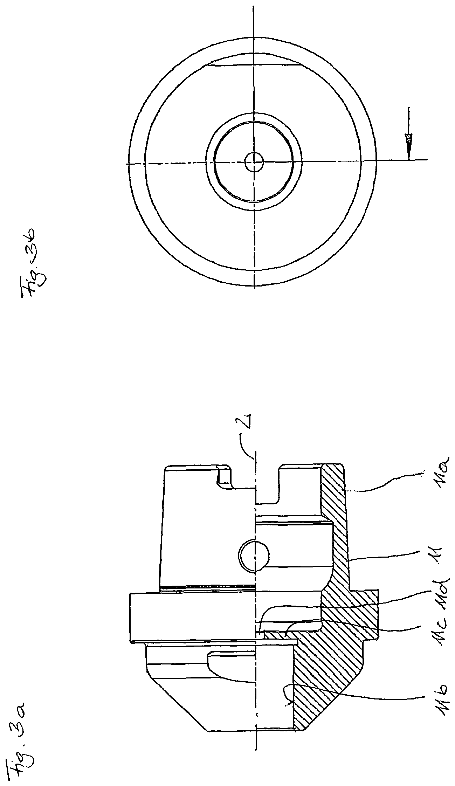

Der Halter 10 ist im Einzelnen in den Fig. 2a bis 5 veranschaulicht. Wie sich im Besonderen aus Fig. 2a ergibt, ist der Halter 10 aus einem Grundkörper 11, einem am Grundkörper 11 koaxial gehaltenen Aufnahmeteil 12 und einer im Aufnahmeteil 12 koaxial angeordneten Gewindehülse 13 modular aufgebaut.

Der aus Stahl hergestellte Grundkörper 11 hat auf seiner in Fig. 2a rechten Seite einen Schaft in Gestalt eines Hohlschaftkegels (HSK) 11a zur Ankopplung des Kugelbahnfräsers 1 an beispielsweise eine Werkzeugmaschinenspindel. Auf der in Fig. 2a linken Seite weist der Grundkörper 11 eine zentrische Axialbohrung 11b auf. Die Axialbohrung 11b ist durch eine radiale Trennwand 11c von der axialen Innenausnehmung des Hohlschaftkegels 11a getrennt. In der radialen Trennwand 11c ist mittig ein axialer Durchgriff 11d ausgebildet, der einen Durchgriff eines Werkzeugschlüssels gestattet. Die radiale Trennwand 11c begrenzt die Tiefe der Axialbohrung 11b und bildet einen axialen Endanschlag für das Aufnahmeteil 12 und die Gewindehülse 13.

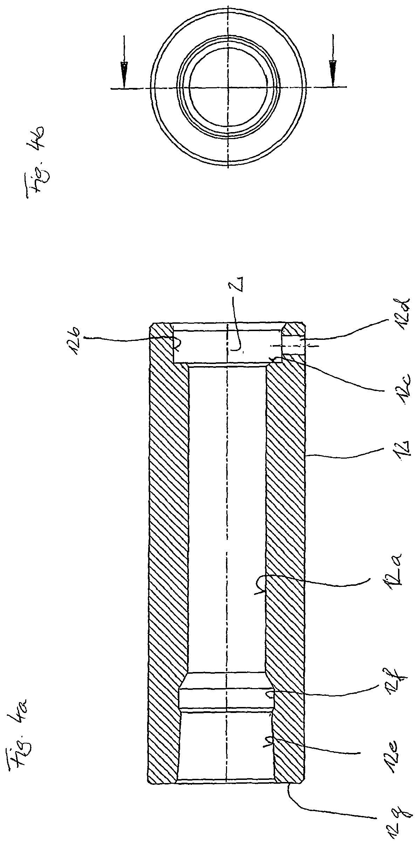

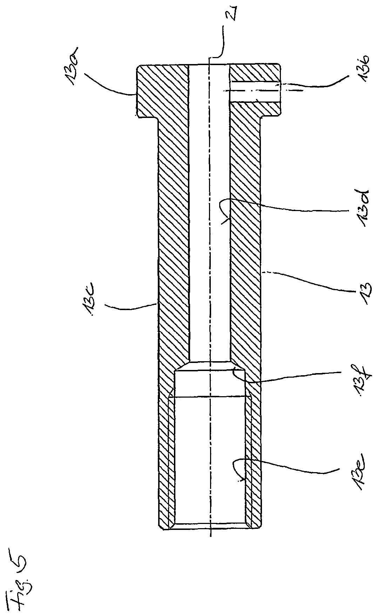

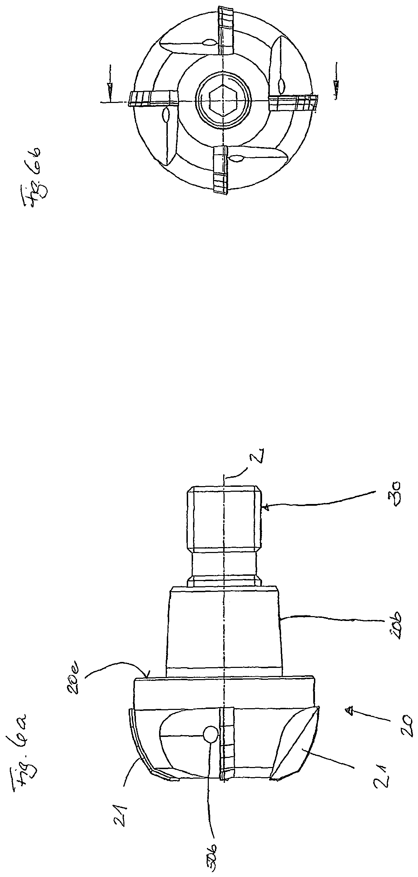

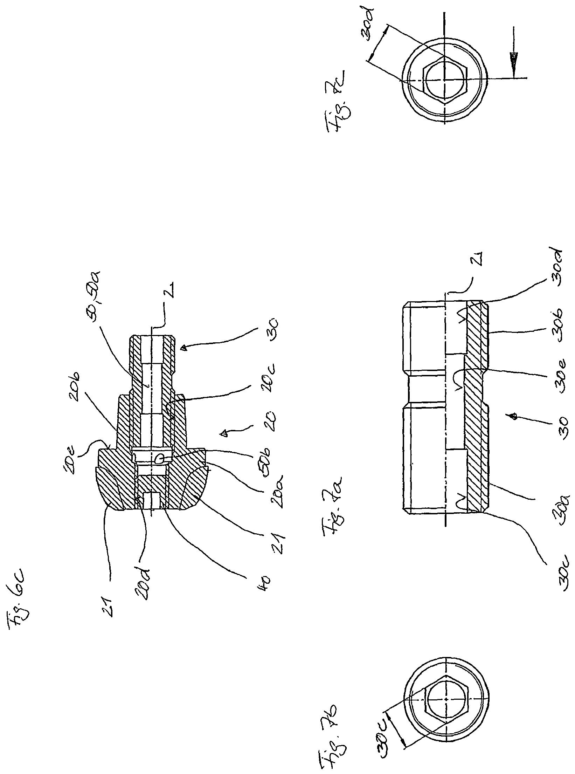

Das im Einzelnen in Fig. 4a und 4b gezeigte Aufnahmeteil 12 ist aus einer hohlzylindrischen Buchse aus einem Hartmetall-Werkstoff gebildet und mit einer Presspassung in der axiale Axialbohrung 11b im Grundkörper 11 eingeschrumpft, d.h. dreh- und axialfest in den Grundkörper 11 integriert. Um eine hohe Verbindungssteifigkeit zu erzielen, ist das Aufnahmeteil 12 aus einem geeigneten Hartmetall-Werkstoff hergestellt. Das Aufnahmeteil 12 weist in seinem mittleren Längenabschnitt eine Axialbohrung 12a auf, die die später beschriebene Gewindehülse 13 aufnimmt. Auf der in Fig. 4a rechten Seite schließt sich an die Axialbohrung 12a ein im Durchmesser vergrößerte Sacklochbohrung 12b an, die in Fig. 4a nach links von einer radialen Stufe 12c begrenzt wird. Die radiale Stufe 12c bildet eine Anlagefläche, an der ein in Fig. 5 zu sehender flanschartiger Radialvorsprung 13a der Gewindehülse 13 axial abgestützt ist. Im Bereich des Längenabschnitts der Sacklochbohrung 12b weist das Aufnahmeteil 12 weiter eine Querbohrung 12d auf, die zur Aufnahme eines in Fig. 2a zu sehenden Verbindungsstifts 14 dient, der die Gewindehülse 13 drehfest mit dem in den Grundkörper 12 eingeschrumpften Aufnahmeteil 12 verbindet. Die Axialbohrung 12a mündet in Fig. 4a nach links in eine sich in Fig. 4a nach links im Durchmesser vergrößernde konische Aufnahmeöffnung 12e. Ein Übergangsabschnitt 12f verbindet den Innenkonus der Aufnahmeöffnung 12e mit der Axialbohrung 12a. Die konische Aufnahmeöffnung 12e dient zur Aufnahme eines in Fig. 6a und 6c zu erkennenden konischen Axialvorsprungs 20b (Außenkonus) des Fräskopfs 20.

Die in der Axialbohrung 12a des Aufnahmeteils 12 anzuordnende, rohrartige Gewindehülse 13 ist aus einem HSS-Werkstoff hergestellt und, wie es in Fig. 5 zu sehen ist, im Wesentlichen T-förmig ausgebildet. Sie weist auf der in Fig. 5 rechten Seite den oben erwähnten flanschartigen Radialvorsprung 13a auf, der an seiner in Fig. 5 linken ringförmigen Stirnfläche an von der radiale Stufe 12c gebildeten radialen Anlagefläche axial zur Anlage kommt, wenn die Gewindehülse 13 in Fig. 4a von rechts in das Aufnahmeteil 12 eingeschoben wird. Die axiale Länge des Radialvorsprungs 13a ist idealerweise größer-gleich der axialen Tiefe der Sachlochbohrung 12b des Aufnahmeteils 12. In dem in Fig. 2a zu sehenden Zustand, liegen die Gewindehülse 13 und das Aufnahmeteil 12 an der fräskopfseitigen Stirnfläche der radialen Trennwand 11c, d.h. am Boden der Zylinderbohrung 11b, an. In diesem Fall erfährt die Gewindehülse 13 sowohl in Richtung Fräskopf 20 als auch in Richtung Halter 10 eine axiale Abstützung ohne die Möglichkeit, sich axial bewegen zu können. In dem Längenabschnitt des Radialvorsprungs 13a weist die Gewindehülse 13 des Weiteren eine Querbohrung 13b auf, die in dem in Fig. 2a zu sehenden Zustand, in dem die Gewindehülse 13 bis zur Anlage des Radialvorsprungs 13a an der radialen Stufe 12c in das Aufnahmeteil 12 eingeschoben ist, mit der Querbohrung 12d des Aufnahmeteils 12 fluchtet. Der in Fig. 2a zu sehende Verbindungsstift 14 steckt in den beiden Querbohrungen 12d, 13b, wodurch eine dreh- und axiale feste Verbindung zwischen der Gewindehülse 13 und dem Aufnahmeteil 12 oder allgemein zwischen der Gewindehülse 13 und dem Halter 10 erhalten wird.

In einer alternativen Ausführung kann die axiale Länge des Radialvorsprungs 13a der Gewindehülse 13 kleiner sein als die axiale Tiefe der Sachlochbohrung 12b des Aufnahmeteils, wodurch die Gewindehülse 13 in dem in Fig. 1a gezeigten Spannzustand nach rechts hin also in einem geringen axialen Abstand zur radialen Trennwand 11c des Grundkörpers 11 angeordnet wäre. Diese Ausführung lässt eine begrenzte axiale Verschiebung der Gewindehülse 13 im Halter 10 beispielsweise dann zu, wenn die Gewindehülse 13 anstelle der Querbohrung 12d eine axiale Längsnut aufweist, in die der Verbindungsstift 14 eingreift.

An den Radialvorsprung 13a schließt sich in Fig. 5 nach links ein Zylinderabschnitt 13c an. Der Außendurchmesser des Zylinderabschnitts 13c ist kleiner als der Innendurchmesser der Axialbohrung 12a des Aufnahmeteils 12. Des Weiteren ist der Außendurchmesser des Radialvorsprungs 13a kleiner als der Innendurchmesser der Sachlochbohrung 12b des Aufnahmeteils 12. Die Gewindehülse 13 lässt sich dadurch mit einem definierten seitlichen Spiel in Fig. 4a von rechts her in das Aufnahmeteil 12 einführen, bis der Radialvorsprung 13a an der radialen Stufe 12c des Aufnahmeteils 12 zur Anlage kommt. In diesem Zustand fluchten die beiden Querbohrungen 13b, 12d miteinander (oder fluchtet in der alternativen Ausführung die Querbohrung 13b mit der axialen Längsnut in der Gewindehülse 13).

Die Gewindehülse 13 weist des Weiteren auf ihrer in Fig. 5 linken Seite eine Gewindebohrung 13e auf, in die über einen Übergangsabschnitt 13f in Fig. 5 nach links eine zentrisch durch die Gewindehülse 13 laufende Axialbohrung 13d mündet. In diesen Gewindeabschnitt 13e wird zur Spannung des Fräskopfs 20 gegen den Halter 10 die oben erwähnte Differenzialgewindeschraube 30 eingeschraubt.

Wie es in Fig. 2a dargestellt ist, ist die Länge der Gewindehülse 13 verglichen mit der Länge des Aufnahmeteils 12 derart kleiner, dass die Gewindehülse 13 vor der konischen Aufnahmeöffnung 12e endet, um den axialen Einzug eines später beschriebenen konischen Axialvorsprungs 20b des Fräskopfs 20 in die konische Aufnahmebohrung 12e des Aufnahmeteils 12 nicht zu behindern. In dem in Fig. 2a gezeigten Zustand, endet die Gewindehülse 13 an der Schnittstelle zwischen der Axialbohrung 12a und dem Übergangsabschnitt 12f.

Der Fräskopf 20 ist gemäß Fig. 6a bis Fig. 6c aus einem Trägerkörper 20a aus Stahl oder Vollhartmetall und einer Vielzahl von um die Drehachse 2 verteilt angeordneten plattenförmigen Schneidelementen 21, z.B. Wechsel- oder Wendeschneidplatten, aus Hartstoff, im Besonderen aus CBN oder PKD, oder mit einer HartstoffBeschichtung, im Besonderen aus CBN oder PKD, gebildet. Die Schneidelemente 21 können am Trägerkörper 20a stoffschlüssig, z.B. durch Löten oder Kleben, befestigt sein. Alternativ dazu kann der Fräskopf 20 einstückig, z.B. aus Vollhartmetall oder Hartstoff, ausgebildet sein.

Der Fräskopf 20 hat auf seiner in Fig. 6a rechten Seite einen konischen Axialvorsprung 20b, der zur Befestigung des Fräskopfs 20 an den Halter 10 in die konische Aufnahmeöffnung 12e des Aufnahmeteils 12 einzufügen ist. Wie es in Fig. 1a gezeigt ist, kann im zusammengebauten Zustand des Kugelbahnfräsers 1 eine den Axialvorsprung 20b ringförmig umgebende halterseitige Stirnfläche 20e des Fräskopfs 20 in einem geringen axialen Abstand zu einer gegenüberliegenden ringförmigen Stirnfläche 12g am Aufnahmeteil 12 liegen. Die ringförmige Stirnfläche 20e am Fräskopf 20 ist wie die gegenüberliegende ringförmige Stirnfläche 12g am Aufnahmeteil 12 von einer radialen Planfläche gebildet. Der vom Axialvorsprung 20b des Fräskopfs 20 gebildete Außenkonus und der von der Aufnahmeöffnung 12e des Aufnahmeteils 12 gebildete Innenkonus sind in bei dem in Fig. 1a gezeigten Kugelbahnfräser 1 daher so ausgelegt, dass der Fräskopf 20 bei einer Drehbetätigung der Differenzialgewindeschraube 30 nur soweit in den Halter 10 eingezogen wird, dass die Stirnfläche 20e am Fräskopf 20 nicht zur Anlage an der Stirnflächen12g am Aufnahmeteil 12 kommt. Der Fräskopf 20 erfährt durch die Konusflächenanlage zwischen dem Axialvorsprung 20b und der Aufnahmeöffnung 12e im Aufnahmeteil 12 eine zentrierte Anordnung am Halter 10.

In einer vorteilhaften Weiterbildung sind der vom Axialvorsprung 20b des Fräskopfs 20 gebildete Außenkonus und der von der Aufnahmeöffnung 12e des Aufnahmeteils 12 gebildete Innenkonus so ausgelegt, dass der Fräskopf 20 bei einer Drehbetätigung der Differenzialgewindeschraube 30 soweit in den Halter 10 eingezogen wird, dass die Stirnfläche 20e am Fräskopf 20 zur Anlage an der Stirnflächen12g am Aufnahmeteil 12 kommt, d.h. im gespannten Zustand die Stirnfläche 20e des Fräskopfs 20 ohne einen axialen Abstand plan an der gegenüber liegenden Stirnfläche 12g des Aufnahmeteils 12 anliegt, der Fräskopf 20 gleichzeitig aber durch die Konusflächenanlage zwischen dem Axialvorsprung 20b und der Aufnahmeöffnung 12e im Aufnahmeteil 12 eine zentrierte Anordnung am Halter 10 erfährt.

Wie es in Fig. 6c gezeigt ist, weist der Fräskopf 20 eine zentrisch durch den Axialvorsprung 20b laufende Gewindebohrung 20c auf, in der die Differenzialgewindeschraube 30 eingeschraubt ist. Die Gewindebohrung 20 geht in Fig. 6c nach links in eine im Durchmesser verringerte Gewindebohrung 20d über, in die die Verschlussschraube 40 eingeschraubt ist. Die Gewindebohrung 20d bildet einen stirnseitig offenen axialen Durchgriff, über den ein Zugriff auf die Differenzialgewindeschraube 30 zur Drehbetätigung derselben ermöglicht ist. Um das Eindringen von Spänen, Schmutzpartikeln etc. zu verhindern sowie einen axialen Austritt von Kühl-/Schmiermittel, das über ein später beschriebenes Kühl-/Schmiermittelversorgungssystem zu den Schneidelementen 21 geführt wird, zu verhindern, sitzt in der Gewindebohrung 30c eine Verschlussschraube 40, die die Gewindebohrung 30c fluiddicht verschließt.

Die als Differenzialgewindeschraube 30 ausgebildete Gewindespindel ist im Einzelnen in Fig. 7a bis Fig. 7c gezeigt. Die Differenzialgewindeschraube 30 weist zwei gegensinnig wirkende Gewindeabschnitte 30a, 30b auf, die zur Befestigung des Fräskopfs 20 an den Halter 10 in die Gewindebohrung 20c im Fräskopf 20 bzw. in die Gewindebohrung 13e in der Gewindehülse 13 einzuschrauben sind. Zur Drehbetätigung weist die Gewindespindel 30 zwei stirnseitige Innensechskantöffnungen 13c, 13d auf, die über eine zentrische Verbindungsbohrung 13e miteinander verbunden sind.

Der Kugelbahnfräser 1 hat des Weiteren ein internes Kühl-/Schmiermittelversorgungssystem 50, das im Wesentlichen aus einem entlang der Drehachse 2 zentrisch durch den Halter 10 (den Grundkörper 11 und das Aufnahmeteil 12), die Gewindehülse 13 und die Gewindespindel 30 in den Schneidkopf 20 verlaufenden Kühl-/Schmiermittelkanal 50a sowie einer Vielzahl von dem zentrischen Kühl-/Schmiermittelkanal 50a im Bereich der Gewindebohrung 20c des Fräskopfs 20 abzeigenden und jeweils zu einem der Schneideelemente 21 am Fräskopf 20 führenden Zweigkanälen 50b gebildet ist. Der zentrisch verlaufenden Kühl-/Schmiermittelkanal 50a führt durch die Axialbohrung 13d, den Übergangsabschnitt 13f und die Gewindebohrung 13e der Gewindehülse 13 sowie den Innensechskant 30d, die Verbindungsbohrung 30e und den Innensechskant 30c der Differenzialgewindeschraube 30 in die Gewindebohrung 20c und die Gewindebohrung 20 des Fräskopfs 20 bis zur Verschlussschraube 40. Die Zufuhr des Kühl-/Schmiermittels erfolgt über eine (nicht gezeigte) werkzeugmaschinenseitige Einspeisestelle in die Axialbohrung 13d der Gewindehülse. In Fig. 1a, Fig. 1c und Fig. 6a ist die Austrittsöffnung eines der Zweigkanäle 50b zu sehen, während Fig. 6c die Eintrittsöffnung eines der Zweigkanäle 50b zeigt.

Zum Zusammenbau des Kugelbahnfräsers 1 wird der in Fig. 6c gezeigte Fräskopf 20 mit der bereits vormontierten Differenzialgewindeschraube 30 zunächst axial in die konische Aufnahmeöffnung 12e des am Grundkörper 11 gehaltenen Aufnahmeteils 12, d.h. des Halters 10, eingeführt. Durch eine Drehbetätigung der Differenzialgewindeschraube 30 wird diese anschließend in die bereits im Aufnahmeteil 12 angeordnete Gewindehülse 13 eingeschraubt mit der Folge, dass der Fräskopf 20 axial gegen den Halter 10 gespannt wird. Dabei wird über die Konusflächenanlage zwischen dem Außenkonus des Axialvorsprungs 20b des Fräskopfs 20 und den Innenkonus 12e des Aufnahmeteils 12 automatisch eine Zentrierung des Fräskopfs 20 erreicht. In der oben erwähnten vorteilhaften Weiterbildung wird zusätzlich eine Planflächenanlage zwischen der Stirnfläche am Fräskopf und der Stirnfläche am Halter 10 erreicht. Die Gewindehülse 13 ist dabei, wie oben erwähnt, im Halter 10 drehfest angeordnet und in Richtung Fräskopf 20 axial abgestützt. Zum Antrieb der Differenzialgewindeschraube 30 bietet der Kugelbahnfräser 1 die Möglichkeit, einen passenden Sechskantschlüssel über den HSK-Schaft 11a, den axialen Durchgriff 11d in der radialen Trennwand 11c und die Axialbohrung 13d in der Gewindehülse 13 in den Innensechskant 30d oder alternativ dazu über die Gewindebohrung 20d im Fräskopf 20, ggf. nach vorheriger Entfernung der Verschlussschraube 40, in den Innensechskant 30a einzuführen. Ein passender Sechskantschlüssel kann daher von der Halterseite oder von der Fräskopfkopfseite her eingesetzt werden. Nach erfolgter Spannung des Fräskopfs 20 an den Halter 10 kann die Gewindebohrung 20d im Fräskopf 20 mittels der Verschlussschraube 40 fluiddicht verschlossen werden. In dem zusammengebauten Zustand kann der Kugelbahnfräser 1 an eine (nicht gezeigte) Werkzeugmaschinenspindel angekoppelt werden.

### Bezugszeichenliste

- 1: Kugelbahnfräser (Werkzeug)
- 2: Drehachse
- 10: Halter
- 11: Grundkörper
- 11a: Hohlschaftkegel (Schaft)
- 11b: Axialbohrung
- 11c: radiale Trennwand
- 11d: axialer Durchgriff
- 12: Aufnahmteil
- 12a: Axialbohrung
- 12b: Sacklochbohrung
- 12c: radiale Stufe
- 12d: Querbohrung
- 12e: Aufnahmeöffnung (Innenkonus)
- 12f: Übergangsabschnitt
- 12g: Stirnfläche
- 13: Gewindehülse
- 13a: Radialvorsprung
- 13b: Querbohrung
- 13c: Zylinderabschnitt
- 13d: Axialbohrung
- 13e: Gewindebohrung
- 13f: Übergangsabschnitt
- 20: Fräskopf (Schneidkopf)
- 20a: Trägerkörper
- 20b: Axialvorsprung
- 20c: Gewindebohrung
- 20d: Gewindebohrung (axialer Durchgriff)
- 21: Schneidelement
- 30: Differenzialgewindeschraube (Gewindespindel)
- 30a: Gewindeabschnitt
- 30b: Gewindeabschnitt
- 30c: Innensechskant
- 30d: Innensechskant
- 30e: Verbindungsbohrung
- 40: Verschlussschraube (Verschlusselement)
- 50a: zentrischer Kühl-/Schmiermittelversorgungskanal
- 50b: Zweigkanal

## Patentansprüche

1. Drehantreibbares spanabhebendes Werkzeug (1) mit einem sich entlang einer Drehachse (2) erstreckenden Halter (10) und einem am Halter (10) durch Verschraubung mit einer im Halter (10) angeordneten Gewindehülse (13) koaxial gehaltenen Schneidkopf (20), wobei die Gewindehülse (13) im Halter (10) drehfest angeordnet und zumindest in Richtung Schneidkopf (20) axial abgestützt ist, **dadurch gekennzeichnet, dass** der Schneidkopf (20) mittels einer in die Gewindehülse (13) eingeschraubten Gewindespindel (30) axial gegen den Halter (10) gespannt ist, wobei die Gewindespindel (30) ein Differenzialgewinde mit gegensinnig wirkenden Gewindeabschnitten (30a, 30b) aufweist, die in eine Gewindebohrung (13e) in der Gewindehülse (13) bzw. eine Gewindebohrung (20c) im Schneidkopf (20) eingeschraubt sind, wobei der Halter (10) aus einem Grundkörper (11) und einem am Grundkörper (11) dreh- und axialfest gehaltenen Aufnahmeteil (12) gebildet ist, in der die Gewindehülse (13) angeordnet ist.

2. Werkzeug (1) nach Anspruch 1, **dadurch gekennzeichnet, dass** der Schneidkopf (20) an seinem halterseitigen Ende einen in einer axialen Aufnahmeöffnung (12e) im Halter (10) eingesetzten Axialvorsprung (20b) aufweist.

3. Werkzeug (1) nach Anspruch 1 oder 2, **dadurch gekennzeichnet, dass** der Axialvorsprung (20b) und die Aufnahmeöffnung (12e) jeweils konisch ausgebildet sind.

4. Werkzeug (1) nach Anspruch 2 oder 3, **dadurch gekennzeichnet, dass** der Schneidkopf (20) an seinem halterseitigen Ende eine den Axialvorsprung (20b) ringförmig umgebende Stirnfläche (20c) aufweist, die an einer gegenüberliegenden Stirnfläche (12g) am Halter (10) anliegt.

5. Werkzeug (1) nach Anspruch 1, **dadurch gekennzeichnet, dass** das Aufnahmeteil (12) im Grundkörper (11) kraftschlüssig aufgenommen ist.

6. Werkzeug (1) nach einem der Ansprüche 1 bis 5, **dadurch gekennzeichnet, dass** die im Halter (10) angeordnete Gewindehülse (13) in Richtung Schneidkopf (20) über einen flanschartigen Radialvorsprung (13a) an einer im Halter (10) ausgebildeten radialen Stufe (12c) axial abgestützt ist.

7. Werkzeug (1) nach einem der Ansprüche 1 bis 6, **dadurch gekennzeichnet, dass** die Gewindespindel (30) über einen stirnseitig offenen axialen Durchgriff (20d) im Schneidkopf (20) zugänglich ist.

8. Werkzeug (1) nach Anspruch 7, **gekennzeichnet durch** ein in dem axialen Durchgriff (20d) entfernbar angeordnetes Verschlusselement (40), das den axialen Durchgriff (20d) verschließt.

9. Werkzeug (1) nach einem der Ansprüche 1 bis 8, **gekennzeichnet durch** einen entlang der Drehachse (2) zentrisch durch den Halter (10) und die Gewindespindel (30) in den Schneidkopf (20) verlaufenden Kühl-/Schmiermittelkanal (50a) zum Versorgen des Schneidkopfs (20) mit einem halterseitig zugeführten Kühl-/Schmiermittel.

10. Werkzeug (1) nach Anspruch 9, **dadurch gekennzeichnet, dass** sich der zentrische Kühl-/Schmiermittelkanal (50a) im Schneidkopf (20) in wenigstens einen Zweigkanal (50b) verzweigt, der zu wenigstens einer zugeordneten Schneide am Schneidkopf (20) führt.

11. Werkzeug (1) nach einem der Ansprüche 1 bis 10, **dadurch gekennzeichnet, dass** die Gewindehülse (13) im Halter (10) mit einer Spielpassung aufgenommen und mit dem Halter (10) zumindest drehfest verbunden ist.

12. Werkzeug (1) nach einem der Ansprüche 1 bis 11, **dadurch gekennzeichnet, dass** der Schneidkopf (20) aus einem Trägerkörper (20a) und einem oder mehreren am Trägerkörper (20a) befestigten Schneidelementen (2f) gebildet ist.

## Claims

1. Rotary-drivable machining tool (1) with a holder (10) extending along a rotary axis (2) and with a cutting head (20) held coaxially on said holder (10) by being screwed to a threaded sleeve (13) arranged in said holder (10), said threaded sleeve (13) being arranged co-rotatably in the holder (10) and supported axially at least in the direction of the cutting head (20), **characterized in that** the cutting head (20) is clamped axially against the holder (10) by means of a threaded spindle (30) screwed into the threaded sleeve (13), said threaded spindle (30) having a differential thread with threaded sections (30a, 30b) acting in opposite directions which are screwed into a threaded hole (13e) in the threaded sleeve (13) or into a threaded hole (20c) in the cutting head (20), the holder (10) being formed from a basic element (11) and a receiving part (12) held in a co-rotatably and axially fixed manner on said basic element (11) and in which the threaded sleeve (13) is arranged.

2. Tool (1) according to claim 1, **characterized in that** the cutting head (20) has at its end on the holder side an axial projection (20b) inserted in an axial receiving opening (12e) in the holder (10).

3. Tool (1) according to claim 1 or 2, **characterized in that** the axial projection (20b) and the receiving opening (12e) are each designed conical.

4. Tool (1) according to claim 2 or 3, **characterized in that** the cutting head (20) has at its end on the holder side an end face (20c) annularly surrounding the axial projection (20b) and contacting an opposite end face (12g) on the holder (10).

5. Tool (1) according to claim 1, **characterized in that** the receiving part (12) is non-positively received in the basic element (11).

6. Tool (1) according to one of claims 1 to 5, **characterized in that** the threaded sleeve (13) arranged in the holder (10) is supported axially in the direction of the cutting head (20) by a flange-like radial projection (13a) on a radial step (12c) formed in said holder (10).

7. Tool (1) according to one of claims 1 to 6, **characterized in that** the threaded spindle (30) is accessible via an axial access (20d) open at its end in the cutting head (20).

8. Tool (1) according to claim 7, **characterized by** a sealing element (40) removably arranged in the axial access (20d) and sealing said axial access (20d).

9. Tool (1) according to one of claims 1 to 8, **characterized by** a coolant / lubricant duct (50a) passing centrally along the rotary axis (2) through the holder (10) and the threaded spindle (30) into the cutting head (20) for supplying said cutting head (20) with a coolant / lubricant supplied on the holder side.

10. Tool (1) according to claim 9, **characterized in that** the central coolant / lubricant duct (50a) in the cutting head (20) branches into at least one branch duct (50b) that leads to at least one associated cutting edge on said cutting head (20).

11. Tool (1) according to one of claims 1 to 10, **characterized in that** the threaded sleeve (13) is received in the holder (10) with a clearance fit and is at least in a co-rotatably fixed manner connected to said holder (10).

12. Tool (1) according to one of claims 1 to 11, **characterized in that** the cutting head (20) is formed from a carrier element (20a) and one or more cutting elements (2f) fastened to said carrier element (20a).

## Revendications

1. Outil d'enlèvement de copeaux entraîné en rotation (1) avec un support (10) s'étendant le long d'un axe rotatif (2) et une tête de coupe (20) montée coaxialement sur le support (10) par vissage avec une douille filetée (13) disposée dans le support (10), sachant que la douille filetée (13) est disposée de manière solidaire en rotation dans le support (10) et appuyée axialement au moins en direction de la tête de coupe (20), **caractérisé en ce que** la tête de coupe (20) est serrée axialement contre le support (10) au moyen d'une broche filetée (30) vissée dans la douille filetée (13), sachant que la broche filetée (30) présente un filetage différentiel avec sections filetées (30a, 30b) agissant à contresens et qui sont vissées dans un alésage fileté (13e) dans la douille filetée (13) ou qui sont vissées dans un alésage fileté (20c) dans la tête de coupe (20), sachant que le support (10) est constitué d'un corps de base (11) et d'un logement (12) monté sur le corps de base (11) de manière solidaire en rotation et axialement fixe, et dans lequel est disposée la douille filetée (13).

2. Outil (1) selon la revendication 1, **caractérisé en ce que** la tête de coupe (20) présente sur son extrémité côté support une saillie axiale (20b) insérée dans un orifice de logement axial (12e) dans le support (10).

3. Outil (1) selon la revendication 1 ou 2, **caractérisé en ce que** la saillie axiale (20b) et l'orifice de logement (12e) sont chacun de forme conique.

4. Outil (1) selon la revendication 2 ou 3, **caractérisé en ce que** la tête de coupe (20) présente sur son extrémité côté support une surface frontale (20c) entourant de manière annulaire la saillie axiale (20b), laquelle surface frontale repose contre une surface frontale opposée (12g) sur le support (10).

5. Outil (1) selon la revendication 1, **caractérisé en ce que** le logement (12) est logé dans le corps de base (11) par liaison de force.

6. Outil (1) selon l'une des revendications 1 à 5, **caractérisé en ce que** la douille filetée (13) disposée dans le support (10) est appuyée axialement en direction de la tête de coupe (20) contre un épaulement radial (12c) constitué dans le support (10) par le biais d'une saillie radiale (13a) de type bride.

7. Outil (1) selon l'une des revendications 1 à 6, **caractérisé en ce que** la broche filetée (30) est accessible par le biais d'un passage (20d) axial dans la tête de coupe (20), ouvert du côté frontal.

8. Outil (1) selon la revendication 7, **caractérisé en** un élément de fermeture (40) disposé de manière amovible dans le passage axial (20d) et qui ferme le passage axial (20d).

9. Outil (1) selon l'une des revendications 1 à 8, **caractérisé en** un canal de liquide de refroidissement et de lubrification (50a) s'étendant dans la tête de coupe (20) à travers le support (10) et la broche filetée (30), de manière centrée le long de l'axe de rotation (2) et destiné à alimenter la tête de coupe (20) en liquide de refroidissement et de lubrification distribué côté support.

10. Outil (1) selon la revendication 9, **caractérisé en ce que** le canal de liquide de refroidissement et de lubrification (50a) se sépare au moins en un canal secondaire (50b) dans la tête de coupe (20), qui conduit à au moins une lame associée, sur la tête de coupe (20).

11. Outil (1) selon l'une des revendications 1 à 10, **caractérisé en ce que** la douille filetée (13) est logée avec un ajustement avec jeu dans le support (10) et est reliée au support (10) au moins de manière solidaire en rotation.

12. Outil (1) selon l'une des revendications 1 à 11, **caractérisé en ce que** la tête de coupe (20) est constituée d'un corps porteur (20a) et d'un ou de plusieurs éléments de coupe (2f) fixés sur le corps porteur (20a).
